Europäisches Patentamt

European Patent Office

Office européen des brevets

(11) Veröffentlichungsnummer: **0 340 650**
**A1**

## (12) EUROPÄISCHE PATENTANMELDUNG

(21) Anmeldenummer: **89107720.8**

(22) Anmeldetag: **28.04.89**

(51) Int. Cl.⁴: **H01G 1/11**

(30) Priorität: **04.05.88 DE 3815056**

(43) Veröffentlichungstag der Anmeldung:
**08.11.89 Patentblatt 89/45**

(84) Benannte Vertragsstaaten:
**DE FR GB IT**

(71) Anmelder: **Standard Elektrik Lorenz**
**Aktiengesellschaft**
**Lorenzstrasse 10**
**D-7000 Stuttgart 30(DE)**

(72) Erfinder: **Hoffmann, Gerhard**
**Kloster-Banz-Strasse 4**
**D-8600 Bamberg(DE)**

(74) Vertreter: **Hösch, Günther, Dipl.-Ing. et al**
**Standard Elektrik Lorenz AG Patent- und**
**Lizenzwesen Postfach 30 09 29**
**D-7000 Stuttgart 30(DE)**

(54) **Elektrischer Kondensator.**

(57) Um ein Abschalten auch bei geringerem Innendruck sowie bei Gehäusebechern kleinerer Abmessungen sicher zu erreichen, wird die eine Zuleitung (7) mit einem Kontaktstück (10) verschweißt. Das Kontaktstück (10) ist unter der Isolierkappe (11) angeordnet und derart großvolumig, daß es nicht durch die in der Isolierkappe (11) zur Druchführung der Zuleitung (7) vorgesehenen Durchbrechung (15) gezogen werden kann. Die Verbindungsstelle Zuleitung (7) - Kontaktstück (10) ist relativ leicht zerstörbar. Für das Wirksamwerden der Sicherung ist daher nur ein geringer Ansprechdruck erforderlich.

Fig.1

EP 0 340 650 A1

## Elektrischer Kondensator

Die vorliegende Erfindung bezieht sich auf einen elektrischen Kondensator gemäß dem Oberbegriff des Anspruchs 1.

Ein derartiger Kondensator ist aus dem DE-GM 83 24 681 bekannt. Bei dem bekannten Kondensator ist der Abreißdraht auf der oberen Stirnkontaktschicht zunächst durch Punktschweißen befestigt und dieser Kontakt dann in einen Lötbatzen eingebettet, auf dem sich der Niederhalteabschnitt der Isolierkappe im Ansprechfall abstützt. Durch diese Anordnung soll der Anschlußpunkt der Zuleitung unverrückbar in seiner Lage fixiert werden, so daß keine Verzögerung des Abschaltzeitpunktes durch ein Nachgeben des Verankerungspunktes der Zuleitung entsteht. Dadurch soll ein frühzeitiges Abschalten nach dem Auftreten eines Überdrucks im Gehäuse gewährleistet sein. Als Abreißsicherung ist die Zuleitung mit einer an sich bekannten Kerbe versehen.

Mit der vorliegenden Erfindung soll die Aufgabe gelöst werden, einen Kondensator der genannten Art so auszugestalten, daß eine Abschaltung durch Ansprechen der Abreißsicherung auch schon bei geringem Innendruck und auch bei Kondensatorgehäusen mit kleinem Gehäusedurchmesser erreicht wird.

Gelöst wird diese Aufgabe durch die im Kennzeichen des Anspruchs 1 angegebenen Merkmale. Durch die Verwendung des Kontaktstückes wird erreicht, daß das Abreißen der Zuleitung vom Kontaktstück an der Schweiß- oder Lötstelle erfolgt, da diese die Schwachstelle der Anschlußanordnung bildet. Eine Schweißung kann auch relativ leicht so eingestellt werden, daß das Ansprechen der Sicherung bei einer bestimmten Abreißkraft, z.B. 1 bis 2 Newton, mit geringer Plus- und Minustoleranz erreicht wird.

Weitere vorteilhafte Einzelheiten der Erfindung sind in den Unteransprüchen angegeben und nachfolgend anhand der in der Zeichnung veranschaulichten Ausführungsbeispiele beschreiben. Es zeigen:

Fig. 1 den Längsschnitt durch das obere Teil eines Kondensators in Seitenansicht,

Fig. 2 bis 7 verschiedene Ausführungsformen der Kontaktstücke mit daran befestigter Zuleitung.

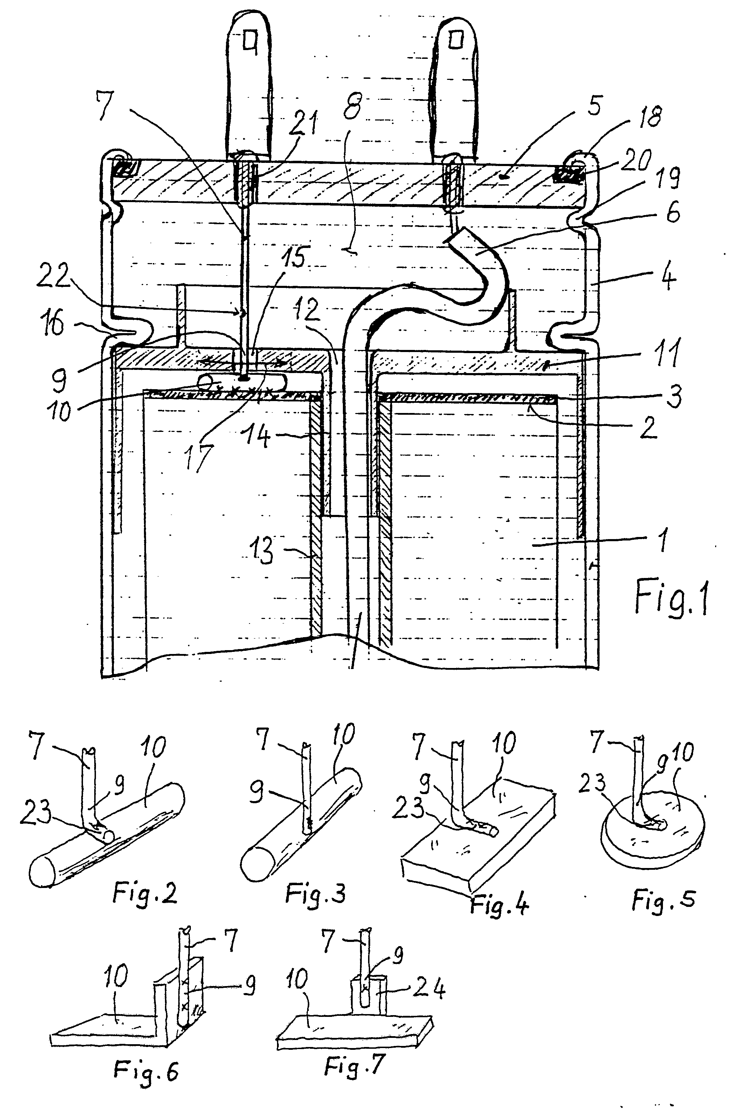

Der Kondensator gemäß Fig. 1 besitzt den Kondensatorwickel 1, der aus wenigstens zwei Belägen aus Isolierfolien mit darauf befindlichen dünnen, ausheilfähigen Metallschichten besteht, die in bekannter Weise an den Stirnseiten, von denen nur die obere Stirnseite 2 dargestellt ist, mittels einer aufgeschoopten Stirnkontaktschicht 3 kontaktiert sind.

Der Kondensatorwickel 1 steckt in einem als Metallbecher 4 ausgebildeten Gehäuse, der durch einen Deckel 5 aus Isolierstoff dicht verschlossen ist. Durch den Deckel 5 ragt je Kondensatorbelag eine Zuleitung 6 und 7 hindurch, von denen die mit der unteren, nicht gezeigten Stirnseite verbundene Zuleitung 6 in einem Freiraum 8 zwischen oberer Stirnseite 2 und Deckel 5 eine Schlaufe bildet.

Die mit der oberen Stirnseite 2 verbundene Zuleitung 7 ist am inneren Ende 9 an ein Kontaktstück 10 angeschweißt oder angelötet. Das Kontaktstück 10 seinerseits ist durch Punktschweißen und/oder Löten, in der Regel durch einen Schweiß-Aufschmelzprozeß, mit der Stirnkontaktschicht 3 elektrisch leitend und mechanisch fest verbunden.

Auf das obere Ende des Kondensatorwickels 1 ist eine Isolierkappe 11 aufgesteckt. Diese besitzt eine zentrale Öffnung 12 mit einem nach unten in den Wickeldorn 13 des Kondensatorwickels 1 ragenden Rohransatz 14. Durch diesen ist die rechte Zuleitung hindurchgeführt.

Über dem Kontaktstück 10, vorzugsweise etwa mittig zu diesem, ist in der Isolierkappe 11 ein relativ kleiner Durchbruch 15 für die Durchführung der zweiten Zuleitung 7 vorgesehen. Kontaktstück 10 und Durchbruch 15 sind in jedem Fall so konstruiert, daß das Kontaktstück 10 nicht durch den Durchbruch 15 hindurchgezogen werden kann.

Durch eine tiefe, durch Sicken und Stauchen des Metallbechers 4 gebildete Ringsicke 16 ist die Isolierkappe 11 knapp oberhalb der Stirnkontaktschicht 3 fixiert, nachdem die Isolierkappe 11 auf die Stirnkontaktschicht 3 aufgedrückt worden ist. Ein Niederhalteabschnitt 17 der Isolierkappe 11 über dem Kontaktstück 10 hält das Kontaktstück 10 stets, also auch in der Abschaltphase, in seiner Lage.

Der Deckel 5 ruht auf einer weiteren im Bereich des Becherrandes 18 vorgesehenen Ringsicke 19. Die dichte Befestigung des Deckels 5 erfolgt durch Umbördeln des Becherrandes 18 unter Einfügung einer Dichtung 20.

Die als Abreißsicherung ausgebildete, in Fig. 1 dargestellte linke Zuleitung 7 ist straff gespannt oder zumindest annähernd gerade gerichtet und mit der Löthülse 21 im Deckel 5 verlötet.

Tritt bei einem derartigen Kondensator ein zu hoher Innendruck auf, so vergrößert sich das Volumen des Freiraumes 8 in der Weise, daß, durch Dehnung der Ringsicke, 16 der Deckel 5 nach oben gedrückt wird. Dabei wird die Zuleitung 7 sofort auf Zug beansprucht, und nach einem kurzen Abhebeweg des Deckels 5 wird die Verbindungsstelle zwischen dem Kontaktstück 10 und der Zuleitung 7 zerrissen und diese damit unterbrochen. Hierzu ist ein relativ niedriger Innendruck von z.B. 1 Newton erforderlich.

Als zusätzliche Sicherung kann die Zuleitung 7 mit einer Sollbruchstelle versehen sein, z.B. eine Einkerbung 22 aufweisen.

Als Werkstoff für die Zuleitung 7 und das Kontaktstück 10 sollen solche Metalle oder Legierungen verwendet werden, deren Dehnbarkeit nicht zu groß ist, z.B. unlegierter oder legierter Stahl, Eisen Kupfer, Leichtmetall oder Leichtmetalllegierungen. Es ist eher erwünscht, daß solche Werkstoffe verwendet werden, welche bei Zugbeanspruchung leicht brechen. Geeignet sind beispielsweise folgende Kombinationen: Kupfer-Kupfer; Kupfer - Messing; Eisen - Eisen; Eisen - Kupfer; Tantal -Eisen. Als vorteilhaft hat es sich herausgestellt, das Kontaktstück 10 an der Oberfläche zu verzinnen oder zu verzinken. Dies ergibt eine bessere Verankerung in der Stirnkontaktschicht 3. Außerdem ist die Schweißverbindung zwischen einem verzinnten oder verzinkten Teil und einem anderen Teil nicht so hoch belastbar wie die Schweißverbindung von unverzinnten oder unverzinkten Teilen. Diesen Vorteil kann man ausnutzen, um das Ansprechen der Abreißsicherung bei möglichst kleinem Innendruck zu erreichen.

Als vorteilhaft hat sich ein Kontaktstück 10 in Stabform gemäß Fig. 2 oder 3 erwiesen, dessen Querschnitt wesentlich größer, insbesondere wenigstens doppel so groß als derjenige der Zuleitung 7 ist. Es ist auch vorteilhaft, das Kontaktstück 10 aus einem Werkstoff höherer Festigkeit als demjenigen des Werkstoffes der Zuleitung 7 herzustellen. Als besonders geeignete Schweißverbindung hat sich die Kreuzschweißung erwiesen. Bei dieser wird in der Regel ein abgewinkelter Schenkel 23 der Zuleitung 7 mit dem Kontaktstück 10 verschweißt. Ausführungsbeispiele für verschiedene Kreuzschweißungen sind in den Fig. 2 bis 5 dargestellt, wobei das Kontaktstück 10 in Fig. 4 als rechteckige und in Fig. 5 als runde Platte ausgebildet ist.

Die Fig. 6 zeigt ein Kontaktstück 10 in Form eines Winkels und die Fig. 7 in Form einer Rechteckplatte mit angeformter Winkellasche 24.

## Ansprüche

1. Elektrischer Kondensator mit Abreißsicherung mit in einem Gehäuse befindlichen Kondensatorwickel, dessen Stirnseiten mit je einer Stirnkontaktschicht versehen sind, an denen durch einen Gehäusedeckel isoliermitteldicht herausgeführte Zuleitungen befestigt sind, und der im Gehäuse eine zwischen Gehäusedeckel und oberer Stirnkontaktschicht angebrachte Ringsicke und eine innen zwischen Ringsicke und Stirnkontaktschicht angebrachte Isolierkappe besitzt, **dadurch gekennzeichnet,** daß das innere Ende (9) der mit der oberen Stirnkontaktschicht (3) verbundenen Zuleitung (7) an ein Kontaktstück (10) angeschweißt oder angelötet ist, das seinerseits mit der Stirnkontaktschicht (3) verschweißt und/oder verlötet ist und dessen Abmessungen größer als die Durchbrechung (15) für die Durchführung der Zuleitung (7) in der Isolierkappe (11) sind.

2. Kondensator nach Anspruch 1, dadurch gekennzeichnet, daß die mit dem Kontaktstück (10) verbundene Zuleitung (7) mit einer Sollbruchstelle (Einkerbung 22) versehen ist.

3. Kondensator nach Anspruch 1 oder 2, dadurch gekennzeichnet, daß das Kontaktstück (10) aus einem der Metalle unlegierter oder legierter Stahl, Eisen, Kupfer, Leichtmetall oder Leichtmetall-Legierung besteht.

4. Kondensator nach Anspruch 1, 2 oder 3, dadurch gekennzeichnet, daß die Oberfläche des Kontaktstücks (10) verzinnt oder verzinkt ist.

5. Kondensator nach einem der Ansprüche 1 bis 4, dadurch gekennzeichnet, daß die Zuleitung (7) mit einem abgewinkelten Schenkel (23) am Kontaktstück (10) befestigt ist.

6. Kondensator nach einem der Ansprüche 1 bis 5, dadurch gekennzeichnet, daß das Kontaktstück (10) als Stab ausgebildet ist, dessen Querschnitt wenigstens doppelt so groß wie der Querschnitt der Zuleitung (7) ist.

7. Kondensator nach Anspruch 6, dadurch gekennzeichnet, daß die Zuleitung (7) etwa in der Mitte des Stabes befestigt ist.

8. Kondensator nach einem der Ansprüche 1 bis 5, dadurch gekennzeichnet, daß das Kontaktstück (10) als Platte ausgebildet ist.

Fig.1

Fig.2

Fig.3

Fig.4

Fig.5

Fig.6

Fig.7

**Europäisches Patentamt**

# EUROPÄISCHER RECHERCHENBERICHT

Nummer der Anmeldung

EP 89 10 7720

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 522 073 (SIEMENS AG) * Spalte 1, Zeile 67 - Spalte 3, Zeile 9; Spalte 3, Zeile 63 - Spalte 4, Zeile 4; Figuren 1-2 * --- | 1-3,8 | H 01 G 1/11 |
| A | EP-A-0 187 921 (SIEMENS AG) --- | | |
| A | GB-A-1 335 981 (BRITISH INSULATED CALLENDER'S CABLES LTD) ----- | | |

**RECHERCHIERTE SACHGEBIETE (Int. Cl.4)**

H 01 G

Der vorliegende Recherchenbericht wurde für alle Patentansprüche erstellt

| Recherchenort | Abschlußdatum der Recherche | Prüfer |
|---|---|---|
| DEN HAAG | 12-07-1989 | SCHUERMANS N.F.G. |